Europäisches Patentamt

European Patent Office

Office européen des brevets

(19)

(11) Veröffentlichungsnummer: **0 248 116 B1**

(12) **EUROPÄISCHE PATENTSCHRIFT**

(45) Veröffentlichungstag der Patentschrift: 06.11.91

(51) Int. Cl.5: **B23H 7/26**, B23H 11/00, B25B 5/10

(21) Anmeldenummer: 86116830.0

(22) Anmeldetag: 03.12.86

Die Akte enthält technische Angaben, die nach dem Eingang der Anmeldung eingereicht wurden und die nicht in dieser Patentschrift enthalten sind.

(54) Vorrichtung zum Einspannen von nicht umlaufenden Werkstücken.

(30) Priorität: 02.06.86 DE 3618521

(43) Veröffentlichungstag der Anmeldung:
09.12.87 Patentblatt 87/50

(45) Bekanntmachung des Hinweises auf die Patenterteilung:
06.11.91 Patentblatt 91/45

(84) Benannte Vertragsstaaten:
AT BE CH DE ES FR GB GR IT LI LU NL SE

(56) Entgegenhaltungen:
EP-A- 0 147 531          DE-A- 1 565 612
DE-A- 2 250 755          DE-A- 2 646 951
DE-A- 3 432 942          FR-A- 2 179 206

PATENT ABSTRACTS OF JAPAN, Band 7, Nr. 211 (M-243)[1356], 17. September 1983; & JP-A-58 107 311 (MATSUSHITA DENKI SANGYO K.K.) 27-06-1983

(73) Patentinhaber: Erowa AG
Winkelstrasse 8
CH-5734 Reinach(CH)

(72) Erfinder: Schneider, Rudolf
Gondiswinkel
CH-5734 Reinach(CH)

(74) Vertreter: Rottmann, Maximilian R.
c/o Rottmann, Quehl & Zimmermann AG
Glattalstrasse 37
CH-8052 Zürich(CH)

## Beschreibung

Die vorliegende Erfindung bezieht sich auf eine Vorrichtung zum Einspannen von nicht umlaufenden Werkstücken, die einen Abschnitt oder einen Schaft mit polygonalem Querschnitt besitzen, nach dem Oberbegriff des Patentanspruches 1.

Eine solche gattungsgemässe Vorrichtung ist aus dem Dokument FR-A-2 179 206 bekannt.

Eine Spannvorrichtung der gattungsgemässen Art dient dazu, ein Werkstück in genau definierter Lage an einer Bearbeitungsmaschine, z.B. an einer Werkzeugmaschine, zu befestigen. Unter Werkstück wird hier nicht nur ein zu bearbeitender Rohling verstanden, sondern auch ein Bearbeitungswerkzeug, das in einer Bearbeitungsmaschine präzise Aufnahme finden soll. Ersichtlicherweise war jedes Werkzeug zunächst auch ein Rohling, der in die gewünschte Form gebracht werden musste. Besondere Bedeutung haben diese Ueberlegungen bei Bearbeitungswerkzeugen für elektroerosive Metallbearbeitungsmaschinen. Hier wird das "Werkzeug", nämlich die Elektrode, sehr oft individuell aus einem Kupferrohling durch Drehen und/oder Fräsen und/oder Schleifen hergestellt, um danach in eine elektroerosive Bearbeitungsmaschine eingespannt und als formgebendes Element verwendet zu werden.

Solche Elektrodenkörper sind aber Werkzeuge, die ausserordentlich hohe Genauigkeitsanforderungen erfüllen müssen, nicht nur in Bezug auf Zentrizität, d.h. innerhalb der X- und Y-Achse, sondern auch in Bezug auf Verdrehung gegenüber ihrer Mittelachse. Zusätzlich ist in vielen Fällen auch in Richtung der Z-Achse ein genaues Mass bzw. eine sehr hohe Positioniergenauigkeit einzuhalten.

Die Formgebung solcher Elektrodenkörper erfolgt dadurch, dass ein Rohling, z.B. aus Kupfer, nacheinander in eine Drehbank und/oder in eine Fräsmaschine und/oder in eine Schleifmaschine eingespannt und dort bearbeitet wird, bis er seine erwünschte Formgebung besitzt, und schliesslich als Bearbeitungswerkzeug in einer elektroerosiven Bearbeitungsmaschine Aufnahme findet, um ein Werkstück mit der bei z.B. Funkenerosionsmaschinen bekannt hohen Genauigkeit zu bearbeiten. Damit diese Genauigkeit schlussendlich gewährleistet ist, muss die Formgebung des Elektrodenkörpers innerhalb kleinster Toleranzen erfolgen; das bedeutet, dass die Einspannung und Fixierung des Rohlings bzw. des Halbfabrikates sowie des fertig bearbeiteten Werkstückes nicht nur während der einzelnen Schritte der Formgebung, sondern auch schliesslich an der elektroerosiven Bearbeitungsmaschine sehr präzise geschehen muss.

Geeignete Kupplungsvorrichtungen zum Einspannen von Elektrodenkörpern in elektroerosive Bearbeitungsmaschinen sind bekannt, welche eine hochpräzise zentrische Anordnung mit genauer Einhaltung einer erwünschten Sollwinkellage der Elektrodenkörper an den Erodiermaschinen gestatten. In vielen Fällen ist es jedoch nicht möglich, die Elektrode bzw. einen Elektrodenrohling direkt an einer solchen Kupplungsvorrichtung anzubringen, so dass eine dazwischengeschaltete Spannvorrichtung erforderlich ist. An eine solche Spannvorrichtung ist neben der erforderlichen Stabilität und Präzision in erster Linie auch die Anforderung zu stellen, dass sie eine möglichst hohe Repetiergenauigkeit gewährleisten soll. Mit anderen Worten heisst das, dass ein Werkstück, z.B. ein Elektrodenrohling, im Zuge seiner formgebenden Bearbeitung oder eine fertige Elektroden während aufeinanderfolgender Erodierschritte aus der Spannvorrichtung entnommen und wieder in diese eingesetzt werden muss, wobei die einmal festgelegte Soll-Lage in X, Y- und gegebenenfalls auch in Z-Richtung sowie bezüglich Winkelposition um die Z-Achse stets mit höchster Präzision wieder eingehalten wird.

Aus der DE-PS 33 47 403 ist eine Vorrichtung zum Einspannen insbesondere von Elektrodenkörper-Rohlingen für Erodiermaschinen bekannt. Diese weist einen Spannkörper mit einer einseitig offenen Spannkammer zur Aufnahme des Elektrodenkörpers auf. Zwei benachbarte Seitenwände dieser Spannkammer sind mit Klemmschrauben versehen. Zur mittigen Anordnung des Elektrodenkörpers sind Unterlageplättchen vorgesehen, die in der erforderlichen Dicke in die Spannkammer eingelegt werden; anschliessend wird der Elektrodenkörper durch Festziehen der Klemmschrauben fixiert. Da diese Vorrichtung sehr einfach aufgebaut und daher preisgünstig ist, kann sie in grosser Anzahl verwendet werden, um jeweils lediglich eine Elektrode aufzunehmen, die stets eingespannt und daher positionsgenau fixiert bleibt. Zur repetitiven Einspannung von Werkstücken bei höchsten Anforderungen an die Lagegenauigkeit in X-, Y- und Z-Richtung sowie bezüglich des Verdrehungswinkels um die Längsachse eignet sich diese Vorrichtung nicht.

Aus der DE-PS 26 46 951 ist eine Befestigungsvorrichtung für Werkzeuge an Funkenerosionsmaschinen oder für ähnliche, nicht umlaufende Werkzeuge bekannt geworden, die eine hochpräzise Einspannung eines an einem zylindrischen Schaft angeordneten Werkzeuges ermöglichen soll. Zu diesem Zweck ist ein Spannfutter mit einer zylindrischen Aufnahme für den Schaft vorgesehen. Eine freie Stirnfläche der Aufnahme soll, in Zusammenarbeit mit einem radial vom zylindrischen Schaft abstehenden Stift, für die genaue Einhaltung der Position in Z-Richtung und eine neben dieser freien Stirnfläche angeordneter, achsparalleler Bolzen soll, in Zusammenarbeit mit dem erwähnten Stift, für die genaue Einhaltung der Winkellage dienen. Wenn das zylindrische Spannfutter genau gearbeitet ist, sollte zudem eine einwandfreie Positionierung in X- und Y-Richtung gewährleistet sein. Nachteilig bei dieser Vorrichtung ist aber deren komplizierter und damit kostspieliger Aufbau, benötigt sie doch zur Einhaltung der geforderten Präzision ein sorgfältig gearbeitetes Spannfutter, einen exakt zylindrischen, vorzugsweise geschliffenen und gehärteten Schaft als Träger des Werkzeugs, einen ebenfalls präzise anzubringenden, vorzugsweise gehärteten Axialbolzen neben dem Spannfutter und einen ebenfalls präzise anzubringenden, vorzugsweise gehärteten Radialstift am Schaft sowie schliesslich eine präzis plan bearbeitete, freie Stirnfläche an der Aufnahme. Eine solche Konstruktion ist durch die Vielzahl der erforderlichen Präzisionsteile teuer in der Herstellung und zudem Verschmutzungs- und Verschleiss-empfindlich, so dass aus den letzteren Gründen kaum mit der Einhaltung der geforderten, hohen Repetiergenauigkeit beim Einspannen von z.B. elektroerosiven Bearbeitungswerkzeugen gerechnet werden kann. Zudem ist schliesslich auch zu vermuten, dass sich eine solche Vorrichtung kaum dazu eignet, einen Elektrodenkörper-Rohling während desser formgebender Bearbeitung genügend stabil zu fixieren, da hierbei (z.B. bei Drehen und Fräsen) hohe Kräfte wirken, die den Punkt-Punkt-Kontakt zwischen radialem Stift am Schaft und axialem Bolzen an der Aufnahme im Sinne einer elastischen oder gar plastischen Verformung überfordern dürften, was ersichtlicherweise zu einer unerwünschten Beeinträchtigung der Repetiergenauigkeit führen muss.

Der Erfindung liegt daher die Aufgabe zugrunde, die Nachteile der bekannten Spannvorrichtung zu vermeiden und eine Vorrichtung zu schaffen, die sehr einfach aufgebaut ist, da sie nur sehr wenige präzis zu bearbeitende Teile umfasst und die deshalb kostengünstig herstellbar ist, die weiter sehr robust und stabil ist, um auch während der formgebenden Bearbeitung eines Rohlings als Spannvorrichtung zu dienen und die aber, bei vernachlässigbar kleiner Verschmutzungs- und Verschleissanfälligkeit, eine ausserordentlich hohe, repetitive Positioniergenauigkeit bietet.

Diese Aufgabe wird durch die Merkmale des Patentanspruchs 1 gelöst.

Mit der erfindungsgemässen Lösung können als Schaft ganz normale, z.B. quadratische, blank gezogene Kupfer- oder Stahlstangen ohne jegliche, weitere Nachbearbeitung verwendet werden, die als preisgünstige Meterware erhältlich sind. Andererseits kann gegebenenfalls, und die ist oft sehr erwünscht, auch ein Elektrodenrohling, der einen polygonalen Querschnitt, vorzugsweise einen quadratischen oder rechteckigen Querschnitt besitzt, direkt eingespannt werden. Die eindeutig definierte, aber nicht überbestimmte Anlage zweier aneinanderstossender Flächen des Schaftes oder Abschnittes an die drei Stege ergibt dabei eine präzise Lagefixierung in X- und Y-Richtung sowie bezüglich des Winkels.

Die Massnahme, dass die Querschnittsabmessung der Spannkammer derart grösser ist als die Querschnittsabmessung des genannten Abschnittes oder Schaftes, so dass der Abschnitt oder Schaft mit Spiel in die Spannkammer einführbar ist, ermöglicht ein leichtes Einsetzen und verringert die durch Verschmutzung hervorgerufenen Nachteile weiter.

Eine besonders bevorzugte Ausführungsform besteht darin, dass der Abschnitt oder der Schaft des Werkstückes sowie die Spannkammer von der Grundform her quadratischen Querschnitt haben, zumal quadratische Kupfer- oder Stahlstäbe, die als Elektrodenrohling oder als Schaft zu verwenden sind, an denen der eigentliche Elektrodenkörper z.B. angelötet wird, leicht und in allen möglichen Abmessungen und Qualitäten erhältlich sind. Es ist dabei nicht unbedingt erforderlich, dass die genannte erste und zweite Innenwand der Spannkammer, die die Stege tragen, exakt rechtwinklig zueinander stehen, obwohl dies z.B. durch eine Bearbeitung der Spannkammer mittels Drahterosion leicht zu erreichen ist.

Wenn eine in Achsrichtung verlaufenden Seitenkante des genannten quadratischen Abschnittes oder Schaftes des Werkstückes abgeschrägt ist, kann weiter erreicht werden, dass der Abschnitt bzw. Schaft nur in einer einzigen Lage in die Spannkammer eingeführt werden kann. Diese Massnahme erleichtert die Handhabung der erfindungsgemässen Vorrichtung.

Falls ebenfalls eine definierte Fixierung in Z-Richtung erwünscht ist, kann die Vorrichtung eine weitere Referenzfläche zur Fixierung des genannten Abschnittes oder Schaftes aufweisen, welche durch einen einstückig mit der Spannkammer ausgebildeten oder an dieser befestigten Bodenteil gebildet ist. Vorzugsweise ist dabei die Spannkammer im Bereich dieses Bodenteils mit mindestens zwei diametral gegenüberliegenden Öffnungen versehen, um eine eventuelle Verschmutzung des Spannkammergrundes durch Ausblasen mit Druckluft zu entfernen.

Im übrigen sind in den abhängigen Ansprüchen 2 bis 18 noch andere Ausführungsformen und Weiterbildungen des Erfindungsgegenstandes beschrieben.

Im folgenden wird eine Ausführungsbeispiel des Erfindungsgegenstandes, mit Bezug auf die beiliegenden Zeichnungen, näher erläutert. In den Zeichnungen zeigen:

Fig. 1    eine perspektivische Ansicht der Spannvorrichtung mi einem eingespannten Schaft, der einen Elektrodenkörper-Rohling trägt,

Fig. 2    eine Seitenansicht des leeren Spannkörpers,

Fig. 3    eine Ansicht des leeren Spannkörpers von oben,

Fig. 4    einen Axialschnitt durch einen Spannkörper mit eingespanntem Schaft entlang der Linie IV-IV in Fig.2., und

Fig. 5    einen Axialschnitt durch einen weitergebildeten Spannkörper mit eingespanntem Schaft, entsprechend der Darstellung in Fig. 4.

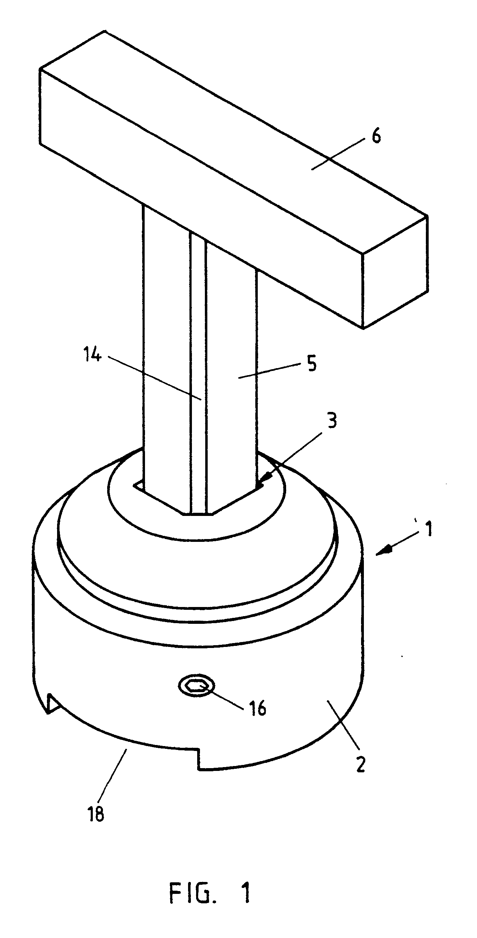

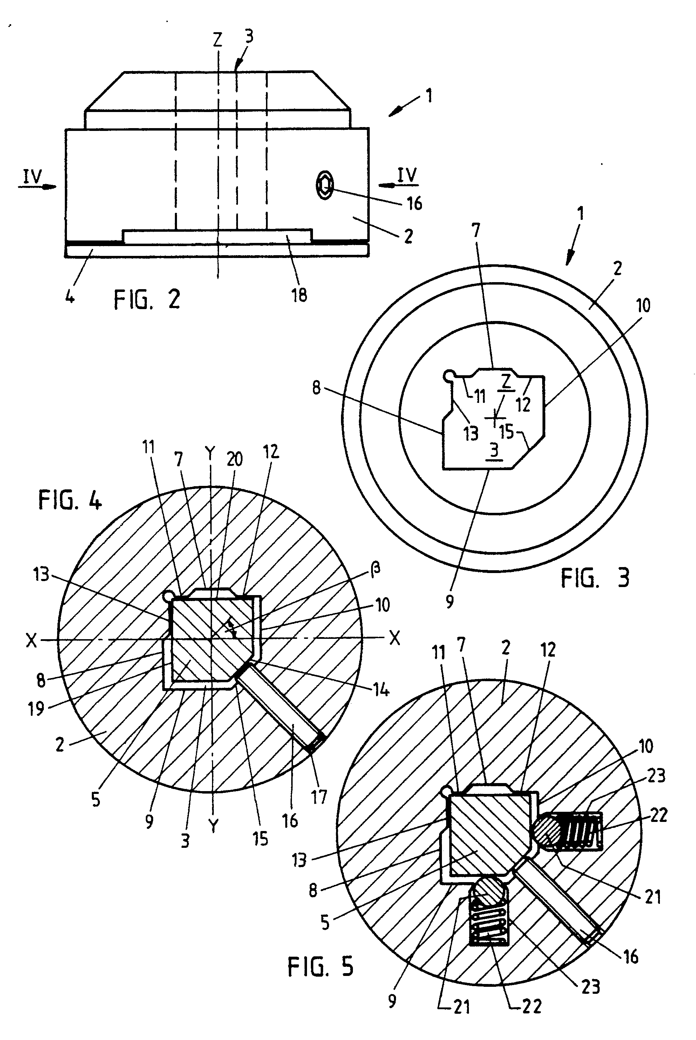

Die in den Zeichnungen dargestellten Ausführungsbeispiele einer Vorrichtung zum Einspannen von nicht umlaufenden Werkstücken oder Werkzeugen, generell mit 1 bezeichnet, weisen einen Spannkörper 2 auf, der im beispielsfall als zylindrischer, gegen oben konisch verjüngter Block z.B. aus Werkzeugstahl besteht. Selbstverständlich sind aber noch andere Formen, z.B. Quader oder dgl. möglich. Im Inneren des Spannkörpers 2, ungefähr koaxial zur Achse Z, der senkrechten Mittelachse durch den Spannkörper, ist eine Spannkammer 3 ausgebildet, die jedenfalls gegen oben, eventuell aber auch gegen unten offen ist. In der Fig. 1 ist eine gegen unten offene Ausführung dargestellt, während im Beispiel gemäss Fig. 2. ein Bodenteil 4 vorgesehen ist, das in irgend einer geeigneten Weise am Spannkörper 2 befestigt oder aber einstückig mit diesem ausgebildet ist. Es wird später noch darauf eingegangen werden.

Die Spannkammer 3 dient zur Aufnahme eines Schaftes 5, an dessen freiem Ende ein Werkstück 6, z.B. ein Elektrodenrohling oder eine fertig bearbeitete Erosionselektrode befestigt ist.

Die Spannkammer 3 hat, normal zur Achse Z, generell quadratischen Querschnitt und erstreckt sich entlang dieser Achse Z durch den Spannkörper 2. Die Innenwände der Spannkammer sind mit 7, 8, 9 und 10 bezeichnet. Die vier Innenwände 7 bis 10 stehen zumindest annähernd rechtwinklig zueinander. Die erste Innenwand 7 weist zwei im Abstand zueinander angeordnete, parallel zueinander und parallel zur Z-Achse verlaufende Stege 11 und 12 auf, die in das Innere der Kammer 3 hineinragen und die im Bereich der beiden in Z-Richtung verlaufenden Seitenkanten der Innenwand 7, d.h. benachbart zu den Innenwänden 8 bzw. 10, angeordnet sind. Die Stege sind relativ schmal; die Summe der Breite der Stege 10 und 11 ist vorzugsweise geringer als die halbe Breite der Seitenwand 7.

Die zweite Innenwand 8 weist einen einzigen, parallel zur Z-Achse verlaufenden Steg 13 auf, der ebenfalls in das Innere der Kammer 3 hineinragt. Er ist benachbart zum Steg 11 an der Innenwand 8 angeordnet und weist eine solche Breite auf, die jedenfalls geringer als die halbe Breite der Innenwand 8 ist.

Die Stege 11 und 12 bzw. 13 dienen als Referenze- bzw. Anschlagflächen für den Schaft 5, wie später noch erklärt werden wird.

Der Schaft 5, der vorzugsweise aus blank gezogenem Kupfer oder aus Werkzeugstahl bestehen kann, weist ebenfalls generell quadratischen Querschnitt auf, wobei die Oberflächengüte ohne Nachbearbeitung völlig ausreicht, um ihn präzise und mit hoher repetitiver Lagegenauigkeit im Spannkörper 2 einzuspannen. Eine Längskante des Schaftes 5 ist abgeschrägt, vorzugsweise unter einem Winkel von 45°, so dass sich abgeschrägte Seitenfläche 14 ergibt. In entsprechender Weise besitzt die Spannkammer 3 eine Abschrägung durch Ausbildung einer unter 45° geneigten Seitenwand 15. Diese liegt diametral gegenüber den beiden benachbarten Stegen 11 und 13 an den Wänden 7 und 8 der Spannkammer 3. Die Querschnittsform der Kammer 3 entspricht somit der Querschnittsform des darin aufzunehmenden Schaftes 5. Durch die Abschrägungen 14 am Schaft 5 und die abgeschrägte Wand 15 in der Kammer 3 ist zunächst einmal sichergestellt, dass der Schaft 5 nur in einer einzigen vorgegebenen Position in die Kammer 3 eingeführt werden kann.

Der lichte Querschnitt der Kammer 3 ist etwas grösser als der Querschnitt des Schaftes 5, so dass ein gewisses Spiel um den Schaft 5 herum gegeben ist, welches einerseits die Einführung des Schaftes 5 erleichtert und andererseits die Einflüsse von allfälligen Verschmutzungen geringe hält bzw. bedeutungslos macht.

Zur Fixierung des Schaftes 5 im Spannkörper 3 ist eine Klemmschraube 16, vorzugsweise in Form einer Madenschraube, vorgesehen, die in eine durch die Wand des Spannkörpers 2 durchgehende Gewindebohrung 17 eingeschraubt ist. Die Achse dieser Klemmschraube 16 erstreckt sich von der Mitte der abgeschrägten Seitenwand 15 zur Kante zwischen den beiden Innenwänden 7 und 8, zielt also gegen die beiden Stege 11 und 13. Mit anderen Worten gesagt, die Wirkrichtung der Klemmschraube liegt also zumindest annähernd auf der Winkelhalbierenden zwischen den beiden Innenwänden 7 und 8 der Spannkammer 3. Damit die Klemmschraube 16 diesen Zweck erfüllen kann, ist sie in Bereich der Abschrägung 15 der Spannkammer 3 angeordnet und verläuft senkrecht zur inneren Oberfläche dieser abgeschrägten Wand.

Eine andere Möglichkeit besteht darin (nicht dargestellt), zwei Klemmschrauben zu verwenden, die den Spannkörper 2 durchdringen und in der Mitte der beiden Innenwände 9 und 10 der Spannkammer 3 münden, um gemeinsam den Schaft 5 gegen die Stege 11, 12 und 13 zu pressen.

Der Spannkörper 2 ist in seinem unteren Bereich mit zwei diametral gegenüberliegenden Öffnungen, z.B. in Form von Schlitzen 18, versehen; in den Fig. 1 und 2 ist jeweils nur einer davon gezeigt. Diese Schlitze dienen dazu, im Bodenbereich der Spannkammer 3 eventuell vorhandene Verunreinigung wie Späne oder dgl. z.B. mittels Druckluft auszublasen.

Wenn zusätzlich eine Lagefixierung des Schaftes 5 und damit des Werkstückes 6 in Z-Richtung erwünscht ist, kann, wie schon erwähnt, das untere Ende der Spannkammer 3 mit einem Bodenteil 4 versehen sein. Eine Möglichkeit besteht darin, dieses Bodenteil 4 an den Spannkörper 2 anzuschrauben oder sonstwie zu befestigen bzw. das Bodenteil 4 als integrierenden Bestandteil des Spannkörpers 2 auszubilden. Letztere Möglichkeit ist hingegen weniger vorteilhaft, wenn die Form der Spannkammer 3 durch Drahterosion, die bekanntermassen ein äusserst präzises Bearbeiten ermöglicht, ausgebildet werden soll. Andererseits besteht unter Umständen gar keine Veranlassung, ein separates Bodenteil 4 vorzusehen, nämlich dann, wenn der Spannkörper 2 auf der ebenen Auflagefläche eines Kupplungsorganes, einer Werkzeugmaschine oder dgl. aufliegt und fest mit dieser verbunden ist (nicht dargestellt).

Egal, ob eine separates Bodenteil 4 vorgesehen ist oder ob dieses durch eine andere Auflagefläche gebildet ist, wird durch die Auflage der unteren Stirnfläche des Schaftes 5 eine Positionierung in Z-Richtung gewährleistet, wobei es für die Repetiergenauigkeit, auf die es in erster Linie ankommt, absolut keine Rolle spielt, ob diese Stirnfläche nun genau eben bzw. rechtwinklig zur Achse des Schaftes 5 ist oder nicht, solange der Schaft nicht mit roher Gewalt in die Spannkammer 3 hineingeschlagen wird. Hierzu besteht aber niemals die geringste Veranlassung, das stets genügend Spiel für ein müheloses Einführen des Schaftes 5 vorhanden ist.

Eine weitergebildete Ausführungsform der erfindungsgemässen Vorrichtung ist in Fig. 5 in einem Axialschnitt dargestellt. Sie entspricht im wesentlichen der vorher beschriebenen Ausführung, mit dem Unterschied, dass in der Spannkammer 3 federnde Anpressorgane vorhanden sind, die auf den Schaft 5 wirken. Gemäss Fig. 5 sind die Innenwände 9 und 10 der Spannkammer 3, d.h. diejenigen Innenwände, die den Stegen 11 und 12 bzw. dem Steg 13 gegenüberliegen, mit je einer Sackbohrung 23 versehen, die je eine Feder 22 aufnehmen. Das wandseitige Ende jeder Sackbohrung 23 ist etwas verengt und die Bohrungen 23 nehmen je eine Kugel 21 auf, die unter Wirkung der Federn gegen das Innere der Spannkammer 3 gepresst werden. Bei eingesetztem Schaft 5 (gemäss Fig. 5) liegen die Kugeln 21 gegen die benachbarten Seitenflächen des Schaftes 5 auf und drücken diesen gegen die Stege 11 und 12 bzw. 13. Damit ist ein gewisses Vorzentrieren des Schaftes 5 innerhalb der Vorrichtung 1 und gleichzeitig eine Erleichterung in der Handhabung erreicht, da der Schaft 5 durch die Anpresskraft der Kugeln 21 in der Spannkammer 3 festgehalten wird, bis die Klemmschraube 16 angezogen ist.

Bei gelöster Klemmschraube 16 kann der Schaft 5 leicht in die Spannkammer 3 eingeführt werden, gegebenenfalls bis seine untere Stirnfläche auf das Bodenteil 4 oder eine andere Auflagefläche aufliegt. Falls dort eine sichtbare Verschmutzung vorhanden ist, wird durch die seitlichen Schlitze 18 kurz Druckluft durchgeblasen. Im Fall der Ausführung gemäss Fig. 5 sorgen die federbelasteten Kugeln 21 dafür, dass der Schaft bereits mit guter Näherung an die Stege 11 und 12 bzw. 13 anliegt. Nun wird die Spannschraube 16 allmählich angezogen und der Schaft bewegt sich diametral gegen die Stege 11 und 12 bzw. 13, bis zwei benachbarte Seitenfläche, im Beispiel gemäss Fig. 4 und 5, die Fläche 19 gegen den Steg 13 und die Fläche 20 gegen die Stege 10 und 11, satt anliegen. Damit die die Lage in X- und Y-Richtung (Fig. 4) wie auch bezüglich des Verdrehungswinkels $\beta$ eindeutig festgelegt, aber nicht überbestimmt, während die Z-Richtung durch die Auflage der unteren Stirnfläche des Schaftes 5 auf dem Bodenteil 4 oder einer anderen Auflagefläche festgelegt ist.

## Patentansprüche

1. Vorrichtung zum Einspannen von nicht umlaufenden Werkstücken (6), die einen Abschnitt oder einen Schaft (5) mit polygonalem Querschnitt besitzen, bestehend aus einem Spannkörper (2) mit einer im Spannkörper ausgebildeten, im Querschnitt polygonalen Spannkammer (3) zur Aufnahme des genannten Abschnittes oder Schaftes (5), mit Spannmitteln (16) zum Festklemmen des genannten Abschnittes oder Schaftes (5) in der Spannkammer (3) und mit Referenzflächen (11, 12, 13) am Spannkörper (2) zur Fixierung des genannten Abschnittes oder Schaftes (5) zumindest in X- und Y-Richtung sowie bezüglich der Winkellage, wobei die Referenzflächen für den Abschnitt bzw. den Schaft (5) in X- und Y-Richtung sowie für die Winkellage einerseits durch erste und zweite, im Abstand zueinander verlaufende, von einer ersten Innenwand (7) der Spannkammer (3) abstehende Stege (11, 12) und andererseits durch einen dritten, an einer zweiten, benachbarten Innenwand (8) der Spannkammer (3) angeordneten, von der Wand (3) abstehenden Steg (13) gebildet sind, und wobei die Spannmittel (16) zumindest annähernd gegenüber den Stegen (11, 13) so angeordnet sind, dass sie den genannten Abschnitt oder Schaft (5) gegen die Stege (11, 12, 13) klemmen, dadurch gekennzeichnet, dass die ersten und zweiten Stege (11, 12) im Bereich je einer in Achsrichtung verlaufenden Seitenkante der ersten Innenwand (7) und der dritte Steg (13) im Bereich derjenigen in Achsrichtung verlaufenden Seitenkante der zweiten Innenwand (8) angeordnet ist, die an die genannte erste Innenwand (7) angrenzt, wobei ferner eine Abschrägung der Spannkammer (3) vorgesehen ist, die durch eine unter einem Winkel von 45° zu den beiden angrenzenden Innenwänden (9, 10) der Spannkammer (3) verlaufende Wand (15) gebildet ist, welche diametral gegenüber den beiden benachbart liegenden Stegen (11, 13) an den genannten ersten und zweiten Innenwänden (7, 8) der Spannkammer (3) angeordnet ist.

2. Vorrichtung nach Patentanspruch 1, dadurch gekennzeichnet, dass die Spannkammer (3) in der Querschnittsform dem genannten Abschnitt oder Schaft (5) des Werkstückes (6) entspricht.

3. Vorrichtung nach Patentanspruch 1, dadurch gekennzeichnet, dass die ersten, zweiten und dritten Stege (11, 12, 13) in Achsrichtung (Z) des Abschnittes oder Schaftes (5) des Werkstückes (6) und parallel zueinander verlaufen.

4. Vorrichtung nach Patentanspruch 2, dadurch gekennzeichnet, dass die Querschnittsabmessung der Spannkammer (3) derart grösser ist als die Querschnittsabmessung des genannten Abschnittes oder Schaftes (5), dass der Abschnitt oder Schaft (5) mit Spiel in die Spannkammer (3) einführbar ist.

5. Vorrichtung nach Patentanspruch 1, dadurch gekennzeichnet, dass die Spannmittel (16) bezüglich ihrer Wirkrichtung auf der Winkelhalbierenden zwischen den genannten ersten (7) und zweiten (8) Innenwänden angeordnet sind.

6. Vorrichtung nach Patentanspruch 5, dadurch gekennzeichnet, dass die Spannmittel durch eine in eine Wand (15) der Spannkammer (3) eingelassene Klemmschraube (16) gebildet ist.

7. Vorrichtung nach Patentanspruch 1, dadurch gekennzeichnet, dass die Spannmittel durch zwei Klemmschrauben gebildet sind, die in diejenige Wände (9, 10) eingelassen sind, die den mit den Stegen (11, 12 bzw. 13) versehenen Wänden (7 bzw. 8) gegenüberliegen.

8. Vorrichtung nach Patentanspruch 2, dadurch gekennzeichnet, dass der Abschnitt oder Schaft (5) des Werkstückes (6) sowie die Spannkammer (3) von der Grundform her quadratischen Querschnitt besitzen.

9. Vorrichtung nach Patentansprüchen 1 und 6, dadurch gekennzeichnet, dass die Klemmschraube (16) im Bereich der abgeschrägten Wand (15) der Spannkammer (3) angeordnet ist und dass deren Achse senkrecht zu derjenigen Oberfläche der abgeschrägten Wand (15) angeordnet ist, die gegen das Innere der Spannkammer (3) zeigt.

10. Vorrichtung nach einem oder mehreren der vorhergehenden Patentansprüche, dadurch gekennzeichnet, dass sie eine weitere Referenzfläche zur Fixierung des genannten Abschnittes oder Schaftes in Z-Richtung aufweist, die durch eine Bodenfläche (4) der Spannkammer (3) gebildet ist.

11. Vorrichtung nach Patentanspruch 10, dadurch gekennzeichnet, dass die Spannkammer (3) im Bereich der Bodenfläche (4) mit zwei diametral gegenüberliegenden Oeffnungen (18) versehen ist.

12. Vorrichtung nach einem oder mehreren der vorhergehenden Patentansprüche, dadurch gekennzeichnet, dass die Summe der Breiten der genannten ersten und zweiten Stege (11, 12) weniger als die Hälfte der Breite der genannten, ersten Spannkammer-Innenwand (7) beträgt.

13. Vorrichtung nach einem oder mehreren der vorhergehenden Patentansprüche, dadurch gekennzeichnet, dass die Breite des genannten dritten Steges (13) weniger als die Hälfte der Breite der genannten, zweiten Spannkammer-Innenwand (8) beträgt.

14. Vorrichtung nach einem oder mehreren der vorhergehenden Ansprüche, dadurch gekennzeichnet, dass an oder in denjenigen Wänden (9, 10), die den Stegen (11, 12 bzw. 13) gegenüberliegen, federnde Elemente (21, 22) vorgesehen sind, die bei in die Spannkammer (3) eingesetztem Abschnitt oder Schaft (5) gegen dessen zugewandte Oberflächen anliegen und dabei den Abschnitt oder Schaft (5) gegen die Stege (11, 12 bzw. 13) drücken.

15. Vorrichtung nach Anspruch 14, dadurch gekennzeichnet, dass die federnden Elemente Kugeln (21) aufweisen, die durch in Sackbohrungen (23) der Wände (9, 10) gelagerte Federn (22) gegen das Innere der Spannkammer (3) gepresst sind.

## Claims

1. A device for clamping non-rotating workpieces (6) which have a portion or shaft (5) with a polygonal cross-section, consisting of a clamping body (2) with a clamping chamber (3) polygonal in cross-section and formed within the clamping body to receive the said portion or shaft (5), with clamping means (16) adapted to clamp the said portion or shaft (5) in the clamping chamber (3) and with datum faces (11, 12, 13) on the clamping body (2) adapted to fix the said portion or shaft (5) at least in the X and Y axis and in regard to its angular position, whereby the datum faces for the portion or shaft (5) in the x and Y axis and for the angular position are formed on the one hand by first and second mutually spaced apart webs (11, 12) projecting from a first inner wall (7) of the clamping chamber (3) and on the other hand by a third web (13) arranged on a second adjacent inner wall (8) and projecting from said second wall (8), and whereby the clamping means (16) are arranged at least approximately opposite the webs (11, 13) in such a way that they clamp the said portion or shaft (5) against the webs (11, 12, 13), characterized in that the first and second webs (11, 12) are arranged each within the area of an axial lateral edge of the first inner wall (7) and the third web (13) within the area of the axial lateral edge of the second inner wall (8) which adjoins the said first inner wall (7) and whereby furthermore a chamfer is provided in the clamping chamber (3) that is formed by a wall (15) running at an angle of 45° to the two adjacent inner walls (9, 10) of the clamping chamber (3) and lying diametrically opposite the two adjacent webs (11, 13) at the said first and second inner walls (7, 8) of the clamping chamber (3).

2. A device according to claim 1 characterized in that the clamping chamber (3) corresponds in cross-sectional form to the said section or shaft (5) of the workpiece (6).

3. A device according to claim 1 characterized in that the first, second and third webs (11, 12, 13) run in axial direction (Z) of the section or shaft (5) of the workpiece (6) and parallel to one another.

4. A device according to claim 2 characterized in that the cross-sectional dimension of clamping chamber (3) is so much greater than the cross-sectional dimension of the said section or shaft (5) that the section or shaft (5) can be inserted into the clamping chamber (3) with clearance.

5. A device according to claim 1 characterized in that the clamping means (16) are arranged so far as their direction of action on the median is concerned between the said first (7) and second (8) inner walls.

6. A device according to claim 5 characterized in that the clamping means comprise a clamping screw (16) passing through a wall (15) of the clamping chamber (3).

7. A device according to claim 1 characterized in that the clamping means comprise two clamping screws which pass through those walls (9, 10) which are opposite the walls (7 and 8) provided with the webs (11, 12 and 13 respectively).

8. A device according to claim 2 characterized in that the section or shaft (5) of the workpiece (6) and the clamping chamber (3) have a square cross-section as their fundamental form.

9. A device according to claims 1 and 6 characterized in that the clamping screw (16) is arranged within the area of the inclined wall (15) of the clamping chamber (3) and that its axis runs perpendicular to that surface of the inclined wall (15) which faces the interior of the clamping chamber (3).

10. A device according to one or more of the preceding claims characterized in that it comprises a further datum face for fixing the said section or shaft in the Z axis which is constituted by an end face (4) of the clamping chamber (3).

11. A device according to claim 10 characterized in that clamping chamber (3) is provided with two diametrically opposite openings (18) in the area of the end face (4).

12. A device according to one or more of the preceding claims characterized in that the sum of the widths of the said first and second webs (11, 12) is less than half the width of the said first clamping chamber inner wall (7).

13. A device according to one or more of the preceding claims characterized in that the width of the said third web (13) is less than half the width of the said second clamping chamber inner wall (8).

14. A device according to one or more of the preceding claims characterized in that on or in the walls (9, 10) which lie opposite the webs (11, 12 and 13) thrusting means (21, 22) are provided which when the section or shaft (5) is inserted into the clamping chamber (3) are in contact with its facing surfaces, thereby pressing the section or shaft (5) against the webs (11, 12 and 13).

15. A device according to claim 14 characterized in that the thrusting means comprise balls (21) that are thrust towards the interior of the clamping chamber (3) by means of springs housed in pockets (23) in walls (9, 10).

**Revendications**

1. Dispositif de serrage de pièces à usiner non rotatives (6), qui possèdent une section ou une tige (5) à section transversale polygonale, composé d'un corps de serrage (2) avec une chambre de serrage (3), réalisée dans le corps de serrage et présentant une section transversale polygonale, destinée à recevoir ladite section ou tige (5), avec des moyens de serrage (16) pour bloquer ladite section ou tige (5) dans la chambre de serrage (3), et avec des surfaces de référence (11, 12, 13) du corps de serrage (2) pour fixer ladite section ou tige (5) au moins dans les directions X et Y, ainsi qu'en ce qui concerne la position angulaire, les surfaces de référence pour la section ou tige (5) dans les directions X et Y ainsi que pour la position angulaire étant formées par un premier montant (11) et un deuxième montant (12), espacés l'un de l'autre et écartés d'une première paroi intérieure (7) de la chambre de serrage (3), d'une part, et par un troisième montant (13), disposé sur une deuxième paroi intérieure voisine (8) de la chambre de serrage (3), écarté de la paroi (8), d'autre part, et les moyens de serrage (16) étant disposés au moins approximativement en face des montants (11, 13) de manière à bloquer ladite section ou tige (5) contre les montants (11, 12, 13), caractérisé en ce que le premier montant (11) et le deuxième montant (12) sont disposés chacun à proximité d'une arête latérale, orientée dans la direction axiale, de la première paroi intérieure (7), et le troisième montant (13) est disposé à proximité de l'arête latérale, orientée dans la direction axiale, de la deuxième paroi intérieure (8), qui est contiguë à ladite première paroi intérieure (7), et qu'il est prévu en outre une partie biseautée de la chambre de serrage (3), qui est formée par une paroi (15) qui forme un angle de 45° avec les deux parois intérieures contiguës (9, 10) de la chambre de serrage (3), ladite paroi (15) étant diamétralement opposée aux deux montants voisins (11, 13) de la première paroi intérieure (7) et de la deuxième paroi intérieure (8) de la chambre de serrage (3).

2. Dispositif selon la revendication 1, caractérisé en ce que la forme de la section transversale de la chambre de serrage (3) correspond à celle de ladite section ou tige (5) de la pièce à usiner (6).

3. Dispositif selon la revendication 1, caractérisé en ce que les premier, deuxième et troisième montants (11, 12, 13) sont orientés dans la direction axiale (Z) de la section ou tige (5) de la pièce a usiner (6) et parallèlement entre eux.

4. Dispositif selon la revendication 2, caractérisé en ce que la dimension de la section transversale de la chambre de serrage (3) est plus grande que la dimension de la section transversale de ladite section ou tige (5), de manière à ce que la section ou tige (5) puisse être introduite dans la chambre de serrage (3) avec un jeu.

5. Dispositif selon la revendication 1, caractérisé en ce que les moyens de serrage (16), par rapport à leur direction d'action, sont disposés sur la bissectrice entre ladite première paroi intérieure (7) et ladite deuxième paroi intérieure (8).

6. Dispositif selon la revendication 5, caractérisé en ce que les moyens de serrage sont formés par une vis de serrage (16) introduite dans une paroi (15) de la chambre de serrage (3).

7. Dispositif selon la revendication 1, caractérisé en ce que les moyens de serrage sont formés par deux vis de serrage qui pénètrent dans les parois (9, 10) qui sont situées en face des parois (7 et 8) pourvues des montants (11, 12 et 13).

8. Dispositif selon la revendication 2, caractérisé en ce que la forme de base de la section ou tige (5) de la pièce à usiner (6), ainsi de que la chambre de serrage (3), est à section transversale carrée.

9. Dispositif selon les revendications 1 à 6, caractérisé en ce que la vis de serrage (16) est disposée au niveau de la paroi biseautée (15) de la chambre de serrage (3) et que son axe est disposé perpendiculairement à la surface de la paroi biseautée (15) qui est dirigée vers l'intérieur de la chambre de serrage (3).

10. Dispositif selon l'une ou plusieurs des revendications précédentes, caractérisé en ce qu'il comporte une surface de référence supplémentaire pour fixer ladite section ou tige dans la direction Z, qui est formée par une surface de fond (4) de la chambre de serrage (3).

11. Dispositif selon la revendication 10, caractérisé en ce que la chambre de serrage (3) est pourvue, au niveau de la surface de fond (4), de deux ouvertures (18) diamétralement opposées.

12. Dispositif selon l'une ou plusieurs des revendications précédentes, caractérisé en ce que la somme de la largeur desdits premier et deuxième montants (11, 12) est inférieure à la moitié de la largeur de ladite première paroi intérieure (7) de la chambre de serrage.

13. Dispositif selon l'une ou plusieurs des revendications précédentes, caractérisé en ce que la largeur dudit troisième montant (13) est plus petite que la moitié de la largeur de ladite deuxième paroi intérieure (8) de la chambre de serrage.

14. Dispositif selon l'une ou plusieurs des revendications précédentes, caractérisé en ce qu'il est prévu, sur ou dans les parois (9, 10) qui sont situées en face des montants (11, 12 et 13), des éléments élastiques (21, 22) qui, lorsque la section ou tige (5) est mise en place dans la chambre de serrage (3), s'appliquent contre ses parois situées en face et, dans ce cas, pressent la section ou tige (5) contre les montants (11, 12 et 13).

15. Dispositif selon la revendication 14, caractérisé en ce que les éléments élastiques comportent des billes (21) qui sont poussées vers l'intérieur de la chambre de serrage (3) par des ressorts (22) logés dans des trous borgnes (23) des parois (9, 10).

FIG. 1

FIG. 2

FIG. 3

FIG. 4

FIG. 5